# EUROPEAN PATENT APPLICATION

(11) **EP 4 807 797 A1**
(43) Date of publication of application: **16.09.2026**
(21) Application number: 26164297.9
(22) Date of filing: 12.03.2026
(51) Int. Cl.: H01M 4/131, H01M 4/36, H01M 4/525, H01M 4/62, H01M 10/0562, H01M 10/0525

(54) **POSITIVE ELECTRODE COMPOSITE MATERIAL AND ELECTRODE PLATE OF LITHIUM ION BATTERY**

(30) Priority: 14.03.2025 TW 114109493
(71) Applicant: Hon Hai Precision Industry Co., Ltd., 236038 New Taipei City (TW); SolidEdge Solution Inc., 300094 Hsinchu City (TW)
(72) Inventor: HUNG, Chen-Tsung, 300094 Hsinchu City (TW); CHANG, Tseng-Lung, 300094 Hsinchu City (TW)
(74) Representative: Winter, Brandl - Partnerschaft mbB

(57) **Abstract**

The present disclosure provides a positive electrode composite material of a lithium ion battery and an electrode plate including the positive electrode composite material. The positive electrode composite material includes a positive electrode active substance and a lithium ion conductor, where the lithium ion conductor includes island grains attached to a surface of the positive electrode active substance. The positive electrode active substance includes a lithium transition metal oxide having a layered structure or a spinel structure, and the lithium ion conductor includes garnet oxide. An interface formed by the lithium ion conductor and the positive electrode active substance has an interface phase which is different from a crystalline phase of the positive electrode active substance and a crystalline phase of the lithium ion conductor.

## Description

### BACKGROUND

### Field of Invention

The present disclosure relates to the lithium ion battery. More particularly, the present disclosure relates to the positive electrode composite material and the electrode plate of the lithium ion battery.

### Description of Related Art

A transition metal oxide generally has high energy density or high operation voltage, which makes it an advantageous selection for the positive electrode material system of the lithium ion battery. However, when a transition metal oxide is used as the main material of the electrode, the energy barrier may be too high for the lithium ions to move in and out the electrode. Although a single crystal structure of the transition metal oxide can improve the cycling performance of the lithium ion battery, the single crystal structure may not be fully infiltrated by the electrolyte. This increases the difficulty for the lithium ions to pass through the electrode surface and affects the high rate charge and discharge performance of the lithium ion battery.

### SUMMARY

Embodiments of the present disclosure provide a positive electrode composite material of a lithium ion battery and an electrode plate formed of the positive electrode composite material, which results in the lithium ion battery with high charge and discharge performance.

According to some embodiments of the present disclosure, a positive electrode composite material includes a positive electrode active substance and a lithium ion conductor. The positive electrode active substance includes a lithium transition metal oxide having a layered structure or a spinel structure, and the lithium ion conductor includes garnet oxide. The lithium ion conductor includes a plurality of island grains attached to a surface of the positive electrode active substance. An interface formed by the lithium ion conductor and the positive electrode active substance has an interface phase which is different from a crystalline phase of the positive electrode active substance and a crystalline phase of the lithium ion conductor.

According to some embodiments of the present disclosure, a lithium ion battery electrode plate includes a current collection plate and a coating layer on the current collection plate. The coating layer includes a positive electrode composite material and a conductive additive. The positive electrode composite material includes a positive electrode active substance and a lithium ion conductor attached to a surface of the positive electrode active substance, where an interface phase formed by the lithium ion conductor and the positive electrode active substance is different from a crystalline phase of the positive electrode active substance and a crystalline phase of the lithium ion conductor. The conductive additive includes a plurality of carbon nanotubes arranged in an irregular mesh structure, where the carbon nanotubes are wrapped onto a surface of the positive electrode composite material.

According to the above-mentioned, the positive electrode composite material of the present disclosure includes the positive electrode active substance and the lithium ion conductor attached to the surface of the positive electrode active substance. The interface phase between the lithium ion conductor and the positive electrode active substance is different from the crystalline phases of the positive electrode active substance and the lithium ion conductor, thereby improving the lithium ionic conductivity of the positive electrode composite material. The electrode plate includes the positive electrode composite material and the carbon nanotubes wrapped onto the surface of the positive electrode composite material, which increases the electrical conductivity of the electrode plate and improves the charge and discharge performance of the lithium ion battery.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
Fig. 1 is a scanning electron microscope image of a positive electrode composite material, according to some embodiments of the present disclosure.
Fig. 2 is an X-ray diffraction spectroscopy of a positive electrode composite material, according to some embodiments of the present disclosure.
Fig. 3A and Fig. 3B are scanning electron microscope images of an electrode plate, according to some embodiments of the present disclosure.
Fig. 4 is a charge and discharge graph of lithium ion batteries, according to some embodiments of the present disclosure.

### DETAILED DESCRIPTION

Some embodiments of the present disclosure provide a positive electrode composite material and an electrode plate of the lithium ion battery. The positive electrode composite material includes a lithium transition metal oxide acting as a positive electrode active substance and a garnet oxide acting as a lithium ion conductor, where the lithium ion conductor includes a plurality of island grains attached to the surface of the positive electrode active substance. An interface phase between the lithium ion conductor and the positive electrode active substance is different from the phases of the positive electrode active substance and the lithium ion conductor, thereby improving the lithium ionic conductivity of the positive electrode composite material. The electrode plate includes the positive electrode composite material and carbon nanotubes. The carbon nanotubes are wrapped onto the surface of the positive electrode composite material to increase the electrical conductivity of the electrode plate, which improves the charge and discharge performance of the lithium ion battery.

Specifically, a positive electrode active substance may be an isometric or unisometric single crystal lithium transition metal oxide, so that the positive electrode composite material has high charge and discharge cycle performance. In some embodiments, the positive electrode active substance may include a lithium transition metal oxide having a layered structure similar to lithium cobalt oxide to provide the positive electrode composite material with high energy density. For example, the lithium transition metal oxide may include Li_{1±α}NiₓCo_{y}Mn_{z}A_{w}O_{2±β}, where A is one or more elements selected from Nb, Zr, Zn, W, B, Ti, Al, Cr, Ga, Cu, La and Y, 0≤α≤0.1, 0.95≤w+x+y+z≤1.05, and 0≤β≤0.05.

In some other embodiments, the positive electrode active substance may include a lithium transition metal oxide having a spinel structure to allow applying high operation voltage onto the positive electrode composite material. For example, the lithium transition metal oxide may include Li_{1±α}NiₓMn_{y}A_{z}O_{4±β}, where A is one or more elements selected from Co, Nb, Zr, Zn, W, B, Ti, Al, Cr, Ga, Cu, La and Y, 0≤α≤0.1, 0.95≤x+y+z≤1.05, and 0≤β≤0.05.

The lithium ion conductor includes a garnet oxide having high lithium ionic conducting ability, so that the lithium ionic conductivity of the positive electrode composite material may be improved after the surface modification of the positive electrode active substance by using the lithium ion conductor. For example, in some embodiments which the positive electrode composite material acts as the battery positive electrode and the sulfide acts as the battery solid electrolyte, the garnet oxide and the sulfide electrolyte are highly matched to form an interface between the battery positive electrode and the solid electrolyte for the lithium ions to easily pass through.

In addition, the garnet oxide has high chemical stability, and the lithium ions may exchange between the garnet oxide and the positive electrode active substance. Therefore, when the lithium ions are pulled away from the positive electrode active substance under high operation voltage, the garnet oxide may reduce the risk of the structure of the positive electrode active substance to become unstable. This improves the charge and discharge cycle performance of the positive electrode composite material.

In some embodiments, the garnet oxide acting as the lithium ion conductor may include Li_{7±x}La_{3±y}Zr_{2±z}A_{w}O₁₂, where A is one or more elements selected from Ga, Ta, Nb and Al, 0≤x≤0.3, 0≤y≤0.5, 0≤z≤0.5, and 0≤w≤0.5. In the above-mentioned embodiments, the garnet oxide may be formed by a solid state reaction, a hydrothermal method, or a sol-gel method, the formation of the garnet oxide should not be limited.

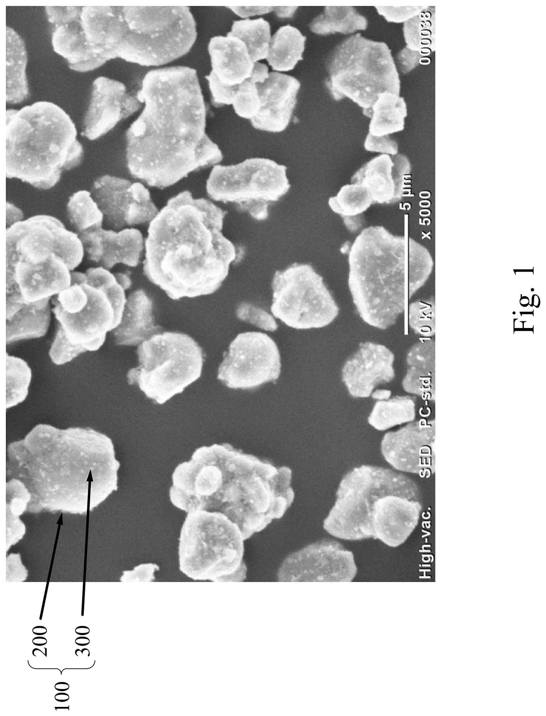

After the lithium ion conductor is attached to the surface of the positive electrode active substance, the lithium ion conductor may form a plurality of island grains to provide a rough external surface of the positive electrode composite material. As a result, the contact area between the positive electrode composite material and electrolyte is increased to improve the conducting efficiency of the lithium ions between the positive electrode composite material and the electrolyte. According to some embodiments of the present disclosure, Fig. 1 is of a scanning electron microscope image of a positive electrode composite material 100. The positive electrode active substance 200 acts as the main body of the positive electrode composite material 100, and the lithium ion conductor 300 is coated on the surface of the positive electrode active substance 200 as a plurality of island grains. The lithium ion conductor 300 may be the island grains separated from each other, as shown in Fig. 1, leading to the surface of the positive electrode active substance 200 discontinuously coated with the island grains. In some other embodiments, the lithium ion conductor 300 may aggregate to form a continuous coating on the surface of the positive electrode active substance 200.

In some embodiments, the positive electrode composite material may include a suitable ratio of the lithium ion conductor to form the rough external surface of the positive electrode active substance by the island grains of the lithium ion conductor. For example, a weight percentage of the lithium ion conductor in the positive electrode composite material may be in a range of 0.5 wt% to 10 wt%. When the weight percentage of the lithium ion conductor is in the above range, the lithium ion conductor may directly adhere to the positive electrode active substance and dry coating the surface of the positive electrode active substance, or the lithium ion conductor may adhere to the positive electrode active substance by an additional adhesive and wet coating the surface of the positive electrode active substance.

It should be noted that when the garnet oxide is attached to the lithium transition metal oxide having the layered structure or the spinel structure, an interface formed by the garnet oxide and the lithium transition metal oxide by processing, such as co-fired, may have an interface phase. This interface phase is different from the crystalline phase of the lithium transition metal oxide (for example, a layered crystalline phase or a spinel crystalline phase) and the crystalline phase of the garnet oxide (for example, a garnet crystalline phase). Such interface phase may enhance the adhesive strength at the heterogeneous interface between the lithium transition metal oxide and the garnet oxide and further decrease the diffusional impedance of the lithium ions at the heterogeneous interface.

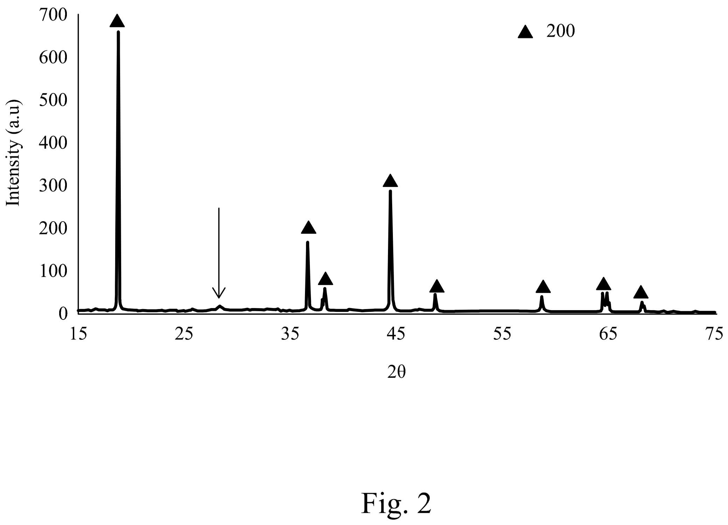

According to some embodiments of the present disclosure, Fig. 2 is an X-ray diffraction spectroscopy of a positive electrode composite material, where a copper target is used for the X-ray diffraction spectroscopy. The X-ray diffraction signal in Fig. 2 mainly shows the crystalline phase of the positive electrode active substance 200 having a layered structure, for example, the characteristic peaks with the diffraction angle (2θ) at 18.785°, 36.650°, 38.101°, 38.269°, 44.370°, 48.874°, 58.765°, 64.478°, 64.729°, 68.029°, 76.736° and 77.549°. The characteristic peak with the X-ray diffraction angle (2θ) in a range of 28° to 29° (labeled with an arrow in Fig. 2) corresponds to the X-ray diffraction signal of the interface phase formed by the positive electrode active substance 200 and the lithium ion conductor 300, and this characteristic peak does not correspond to the crystalline phase of the positive electrode active substance 200 or the garnet crystalline phase of the lithium ion conductor 300 (for example, the characteristic peaks with the diffraction angle (2θ) at 16.743°, 19.356°, 25.699°, 27.508°, 30.831°, 32.376°, 32.285°, 33.858°, 37.999°, 42.986°, 44.163°, 47.548°, 48.635°, 50.759°, 51.797°, 52.821°, 55.811°, 56.783° and 59.642°).

In some embodiments, the positive electrode active substance and the lithium ion conductor may have an appropriate dimension ratio, so that the interface phase formed by the positive electrode active substance and the lithium ion conductor is advantageous for lithium ion conduction, and the positive electrode composite material has a large contact area with the external electrolyte. For example, when the positive electrode active substance is a single crystal grain with a grain size (D₅₀) in a range of 1 µm to 10 µm, the lithium ion conductor may form the island grains on the surface of the positive electrode active substance with a grain size in a range of 1 nm to 200 nm.

The above-mentioned positive electrode composite material may be used to manufacture the positive electrode plate of the lithium ion battery. Specifically, the positive electrode composite material may be coated onto a current collection plate formed of, for example, metal. Then, the positive electrode composite material forms a coating layer on the positive electrode plate positive electrode plate by drying, rolling or other processing. The positive electrode composite material includes the lithium ion conductor attached to positive electrode active substance, so that the positive electrode plate has improved lithium ionic conductivity and chemical stability. The lithium ion conductor having lower electrical conductivity may decrease the electrical conductivity of the electrode plate. As a result, the coating layer may further include a suitable conductive additive to compensate the lowered electrical conductivity due to the lithium ion conductor and increase the electrical conductivity of the electrode plate.

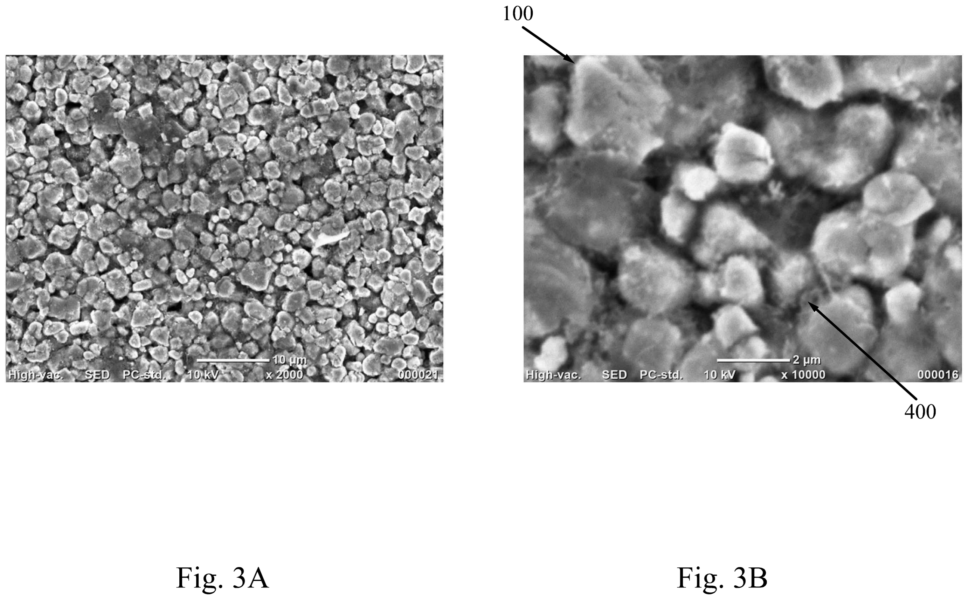

In some embodiments, the conductive additive may include a plurality of carbon nanotubes having lengths in a range of 0.5 µm to 5 µm. According to some embodiments of the present disclosure, Fig. 3A is a scanning electron microscope image of an electrode plate, and Fig. 3B is a partial enlarged view of Fig. 3A. The electrode plate in the figure includes the positive electrode composite material 100 in a granulated form and the carbon nanotubes 400 as filaments. As the positive electrode composite material 100 and the carbon nanotubes 400 are mixed for the coating layer, the carbon nanotubes 400 may be wrapped onto the surface of the positive electrode composite material 100 to form the complex of the positive electrode composite material and the carbon nanotube. This complex has higher electrical conductivity than the positive electrode composite material 100. In addition, the carbon nanotubes 400 may be arranged in an irregular mesh structure to connect the granules of the positive electrode composite material 100, thereby improving the electrical conductivity of the electrode plate.

In some embodiments, the conductive additive may also include a conductive composition other than the carbon nanotubes, for example, amorphous carbon, graphene, carbon fiber, other conductive carbon, or a combination thereof. It should be noted that the mesh structure of the carbon nanotubes may significantly increase the electrical conductivity of the positive electrode composite material. As a result, in some embodiments which the electrode plate includes the conductive additive, a weight percentage of the carbon nanotubes in the conductive additive may be at least in a range of 20 wt% to 100 wt% to achieve the weight percentage of the carbon nanotube in the coating layer in a range of 0.5 wt% to 1.5 wt% and significantly increase the electrical conductivity of the electrode plate.

In some embodiments, the coating layer may also include adhesives, for example, polyvinylidene chloride (PVDF), polyethylene oxide (PEO), or a combination thereof. An appropriate ratio between the positive electrode composite material, the conductive additive, and the adhesive is used to form the coating layer with both high ionic conductivity and high electrical conductivity on the current collection plate by the positive electrode composite material and the conductive additive. For example, a weight percentage of the positive electrode composite material in the coating layer may be higher than or equal to 95 wt%, a weight percentage of the conductive additive may be in a range of 0.5 wt% to 3.0 wt%, and a weight percentage of the adhesive may be in a range pf 0.5 wt% to 2.5 wt%. In some embodiments which the coating layer has the above ratio of the compositions, the coating layer after rolling may have a density in a range of 2.9g/cm³ to 3.5g/cm³ with high charge and discharge efficiency.

In the following descriptions, a variety of measurements and evaluations were performed for the electrode plate formed of the positive electrode composite material of the present disclosure. Herein, experiments 1 to 2 are referred to illustrate the features of the present disclosure more specifically.

### Experiment 1: Basic recipe and electrical conductivity evaluation of electrode plate

In this experiment, the electrical conductivity evaluation is performed for the electrode plate of comparative examples and example 1. Specifically, the electrode plates are first prepared according to the electrode plate recipe in Table 1 below and the above-mentioned electrode plate process. The resulted electrode plates have different composition ratios and a density about 3.0 g/cm³ after a rolling process. In the electrode plate recipe of Table 1, the positive electrode active substance is a single crystal material Li_{1.0}Ni_{0.88}Co_{0.08}Mn_{0.04}O₂ having the grain size (D₅₀) about 3.5 µm as the lithium transition metal oxide, and the lithium ion conductor is a crystal material Li_{6.8}La_{3.0}Zr_{2.0}Ga_{0.33}O₁₂ as the garnet oxide. The positive electrode active substance and the lithium ion conductor are dry mixed to form the positive electrode composite material.

**Table 1**

| | Positive electrode active substance | Lithium ion conductor | Adhesive (PVDF) | Conductive additive 1 (Carbon nanotube) | Conductive additive 2 (Conductive carbon) |
|---|---|---|---|---|---|
| Example 1 | 91.43 | 4.57 | 2.5 | 1.0 | 0.5 |
| Comparative example 1 | 96.0 | 0 | 2.5 | 1.0 | 0.5 |
| Comparative example 2 | 91.43 | 4.57 | 2.5 | 0 | 1.5 |

| | | | | | |
|---|---|---|---|---|---|
| Remark: The units were all wt% | | | | | |

Then, the volume resistivity of the electrode plates of comparative example 2 and example 1 are measured by four-point probes, and the results are shown in Table 2.

**Table 2**

| | Volume resistivity (Ωcm) |
|---|---|
| Example 1 | 4.3×10⁻⁴ |
| Comparative example 2 | 2.4×10⁻³ |

As seen from Table 2, the volume resistivity of the electrode plate of example 1 is lower than that of the electrode plate of comparative example 2. This indicates that adding the conductive additive including the carbon nanotubes into the electrode plate of example1 leads to higher electrical conductivity. Furthermore, the volume resistivity of example is near 10 times lower than that of comparative example 2, which indicates that the carbon nanotubes in the electrode plate of example may significantly improve the electrical conductivity.

### Experiment 2: Impact evaluation of electrode plate on charge and discharge ability of lithium ion battery

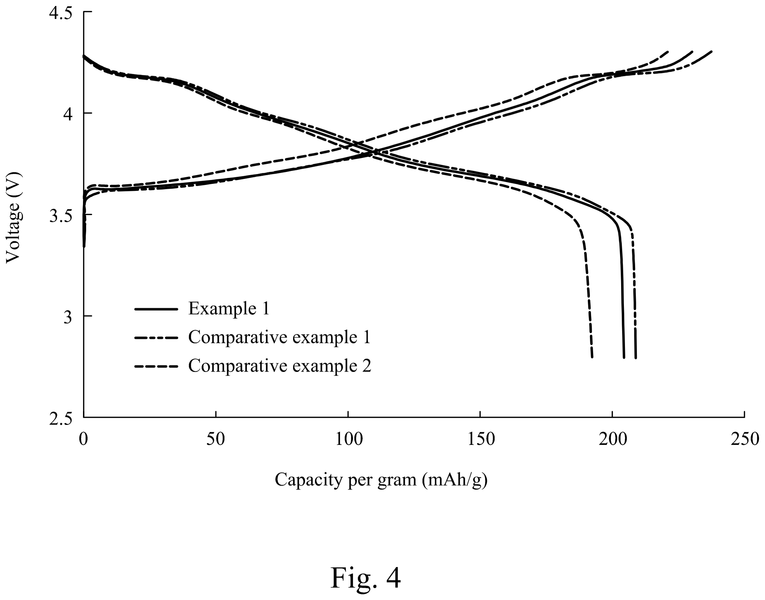

In this experiment, the impact evaluation of the electrode plate on charge and discharge ability is performed for the lithium ion battery of comparative examples and example 1. Specifically, a 2032 coin cell battery is selected as the carrier of the lithium ion battery. The electrode plates of comparative examples and example 1 in experiment 1 are selected as the battery positive electrodes, a lithium metal is selected as the battery negative electrodes, and the positive electrode and the negative electrode of each battery are separated by an isolate film infiltrated by an electrolyte. Then, a charge and discharge cycle under 0.1C constant current charge/0.1C constant current discharge (0.1CC/0.1CD) is performed three times on the lithium ion batteries to activate the lithium ion batteries. The graph of the first charge and discharge cycles is shown in Fig. 4.

As seen from Fig. 4, the curves of the charge and discharge cycles of comparative examples and example 1 are similar. This indicates that the lithium ion batteries of comparative examples and example 1 have similar charge and discharge mechanism. Taking the charge curves in Fig. 4 as an example, a charging plateau at 4.1V representing a high nickel positive electrode may be observed in all of comparative examples and example 1. In other words, attaching the lithium ion conductor to the positive electrode active substance or adding the carbon nanotubes in the electrode plate does not significantly change the charge and discharge mechanism of the lithium ion battery.

Additionally, Fig. 4 illustrates the slight difference of the capacity per gram of the lithium ion batteries between comparative examples and example 1. Compared to the electrode plate composition of comparative example 1, the positive electrode composite materials of example 1 and comparative example 2 include the lithium ion conductor without capacity. As a result, the capacity per gram of example 1 and comparative example 2 are slightly lower than that of comparative example 1. Since the electrode plate of example 1 has higher electrical conductivity than the electrode plate of comparative example 2, the electrode plate of example 1 may fully use the capacity of the positive electrode active substance, leading to the capacity per gram of example 1 higher than comparative example 2.

After the activation of the lithium ion batteries of comparative examples and example 1, a high rate charge and discharge test is performed on the lithium ion batteries. Specifically, the capacity per gram of the lithium ion battery is measured under various current conditions. The percentage of capacity per gram of the lithium ion battery remained under high rate charge and discharge operation is calculated, where the respective capacity per gram of example 1 and comparative examples under 0.2CC/0.2CD is taken as the standard of comparison. The calculating results are shown in Table 3.

**Table 3**

| | 0.2CC/0.2CD | 0.2CC/0.5CD | 0.2CC/1.0CD | 0.2CC/3.0CD |
|---|---|---|---|---|
| Example 1 | 100 | 96.6 | 93.8 | 88.2 |
| Comparative example 1 | 100 | 92.7 | 88.7 | 74.8 |
| Comparative example 2 | 100 | 93.5 | 88.9 | 75.5 |

| | | | | |
|---|---|---|---|---|
| Remark: The units were all %; respective capacity per gram of example 1 and comparative examples under 0.2CC/0.2CD is 100% as a comparison standard | | | | |

As seen from Table 3, example 1 has higher percentage of capacity per gram than comparative examples as the discharge current increases. This indicates that during the high rate charge and discharge operation, it is easier for the lithium ion battery of example 1 to remain the capacity per gram under small discharge current. In other words, attaching the lithium ion conductor to the positive electrode active substance and adding the carbon nanotubes into the electrode plate improve the charge and discharge performance of the lithium ion battery.

Additionally, when the discharge current increases to 3.0C, comparative example 1 and comparative example 2 have similar percentage of capacity per gram, and the percentage of capacity per gram of example 1 is obviously higher than comparative examples. This indicates that if only one process of attaching the lithium ion conductor to the positive electrode composite material or adding the carbon nanotubes to the electrode plate is applied, it may be too hard for the lithium ion battery to remain the capacity per gram under high rate charge and discharge operation. In other words, when attaching the lithium ion conductor to the positive electrode composite material and adding the carbon nanotubes to the electrode plate are both applied, the electrode plate having both high lithium ionic conductivity and high electrical conductivity may efficiently improve the high rate charge and discharge performance of the lithium ion battery.

According to the above-mentioned, the positive electrode composite material of the lithium ion battery of the present disclosure includes the lithium transition metal oxide acting as the positive electrode active substance and the garnet oxide acting as the lithium ion conductor. The lithium ion conductor is attached to the surface of the positive electrode active substance to improve the lithium ionic conductivity of the positive electrode composite material. The interface phase formed by the lithium ion conductor and the positive electrode active substance is different from the crystalline phases of the positive electrode active substance and the lithium ion conductor, so that the heterogeneous interface in the positive electrode composite material having high adhesive strength and low diffusion impedance is advantageous for lithium ion penetration. The electrode plate formed from the positive electrode composite material further includes the carbon nanotubes wrapped onto the surface of the positive electrode composite material, which provides the lithium ion battery having both high lithium ionic conductivity and high electrical conductivity. Therefore, the resulted lithium ion battery has high energy density, high power density, and is suitable for charge and discharge operation at high rate.

## Claims

1. A positive electrode composite material (100), **characterized by** comprising:
a positive electrode active substance (200) comprising a lithium transition metal oxide, wherein the lithium transition metal oxide has a layered structure or a spinel structure; and
a lithium ion conductor (300) comprising a garnet oxide, wherein the lithium ion conductor (300) comprises a plurality of island grains attached to a surface of the positive electrode active substance,
wherein an interface formed by the lithium ion conductor (300) and the positive electrode active substance (200) has an interface phase which is different from a crystalline phase of the positive electrode active substance (200) and a crystalline phase of the lithium ion conductor (300).

2. The positive electrode composite material (100) of claim 1, **characterized in that** the garnet oxide comprises Li_{7±x}La_{3±y}Zr_{2±z}A_{w}O₁₂, where A is one or more elements selected from the group consisting of Ga, Ta, Nb and Al, 0≤x≤0.3, 0≤y≤0.5, 0≤z≤0.5, and 0≤w≤0.5.

3. The positive electrode composite material (100) of any one of previous claims, **characterized in that** the lithium transition metal oxide having the layered structure comprises Li_{1±α}NiₓCo_{y}Mn_{z}A_{w}O_{2±β}, where A is one or more elements selected from the group consisting of Nb, Zr, Zn, W, B, Ti, Al, Cr, Ga, Cu, La and Y, 0≤α≤0.1, 0.95≤w+x+y+z≤1.05, and 0≤β≤0.05.

4. The positive electrode composite material (100) of any one of previous claims, **characterized in that** the lithium transition metal oxide having the spinel structure comprises Li_{1±α}NiₓMn_{y}A_{z}O_{4±β}, where A is one or more elements selected from the group consisting of Co, Nb, Zr, Zn, W, B, Ti, Al, Cr, Ga, Cu, La and Y, 0≤α≤0.1, 0.95≤x+y+z≤1.05, and 0≤β≤0.05.

5. The positive electrode composite material (100) of any one of previous claims, **characterized in that** the positive electrode active substance (200) is a single crystal grain with a grain size (D₅₀) in a range of 1 µm to 10 µm.

6. The positive electrode composite material (100) of any one of previous claims, **characterized in that** a weight percentage of the lithium ion conductor (300) in the positive electrode composite material (100) is in a range of 0.5 wt% to 10 wt%.

7. The positive electrode composite material (100) of any one of previous claims, **characterized in that** each of the island grains has a grain size in a range of 1 nm to 200 nm on the surface of the positive electrode active substance.

8. The positive electrode composite material (100) of any one of previous claims, **characterized in that** a X-ray diffraction signal of the interface phase is different from those of the crystalline phase of the positive electrode active substance (200) and the crystalline phase of the lithium ion conductor (300) when using a copper target, and a diffraction angle (2θ) of the X-ray diffraction signal of the interface phase is in a range of 28° to 29°.

9. The positive electrode composite material (100) of any one of previous claims, **characterized in that** the island grains are separated from each other, and the surface of the positive electrode active substance (200) is discontinuously coated with the island grains.

10. The positive electrode composite material (100) of any one of previous claims, **characterized in that** the island grains aggregate to form a continuous coating on the surface of the positive electrode active substance.

11. A lithium ion battery electrode plate, comprising:
a current collection plate; and
a coating layer on the current collection plate, wherein the coating layer comprises:
the positive electrode composite material (100) of any one of claims 1-10, a conductive additive and an adhesive;
wherein the conductive additive comprising a plurality of carbon nanotubes (400) arranged in an irregular mesh structureand are wrapped onto a surface of the positive electrode composite material (100);
wherein a length of each of the carbon nanotubes (400) is in a range of 0.5 µm to 5 µm.

12. The lithium ion battery electrode plate of claim 11, **characterized in that** a weight percentage of the carbon nanotubes (400) in the coating layer is in a range of 0.5 wt% to 1.5 wt% and a weight percentage of the carbon nanotubes (400) in the conductive additive is in a range of 20 wt% to 100 wt% .

13. The lithium ion battery electrode plate of claim 11, **characterized in that** a weight percentage of the positive electrode composite material (100) in the coating layer is higher than or equal to 95 wt% and a weight percentage of the conductive additive in the coating layer is in a range of 0.5 wt% to 3.0 wt%.

14. The lithium ion battery electrode plate of any one of claims 11-13, **characterized in that** the conductive additive further comprises a conductive carbon additional to the carbon nanotubes (400), and wherein the conductive carbon comprises amorphous carbon, graphene, carbon fiber, or a combination thereof.

15. The lithium ion battery electrode plate of any one of claims 11-14, **characterized in that** a density of the coating layer is in a range of 2.9 g/cm³ to 3.5 g/cm³.
